# EUROPEAN PATENT APPLICATION

(11) **EP 4 322 699 A1**
(43) Date of publication of application: **14.02.2024**
(21) Application number: 23190560.5
(22) Date of filing: 09.08.2023
(51) Int. Cl.: H04W 76/18, H04W 76/15, H04W 28/02, H04W 76/12, H04W 76/22, H04W 76/34

(54) **ACCESS HANDLING WHEN STOPPING 5GSM CONGESTION TIMERS**

(30) Priority: 11.08.2022 US 202263371113 P; 21.07.2023 US 202318225063
(71) Applicant: MediaTek Inc., Hsin-Chu 300 (TW)
(72) Inventor: LIN, Yu-Hsin, Hsinchu City 30078 (TW); CHEN, Bo-Hun, Hsinchu City 30078 (TW); LIN, Yuan-Chieh, Hsinchu City 30078 (TW)
(74) Representative: Hoefer & Partner Patentanwälte mbB

(57) **Abstract**

In 5GS, Single-Network Slice Selection Assistance Information (S-NSSAI) based backoff (BO) timers (T3585) can be applied to either 3GPP access or non-3GPP access or both access based on a 5GSM congestion re-attempt indicator. When UE receives a 5GSM message over a specific access, UE needs to handle a current running timer. In one novel aspect, it is proposed that the UE stops the running timer applied for the same access which the message is received, and also stops the running timer applied for both access types. In another novel aspect, it is proposed that the UE stops the running timer applied for the access different from the access which the message is received when the UE starts a new timer applied for both access types.

## Description

### Field of the Invention

The disclosed embodiments relate generally to wireless communication, and, more particularly, to a method of supporting handling of 5GS session management (5GSM) congestion timers in next generation 5G mobile communication systems.

### Background of the Invention

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). In LTE systems, an Evolved Universal Terrestrial Radio Access Network (E-UTRAN) includes a plurality of evolved Node-Bs (eNodeBs or eNBs) communicating with a plurality of mobile stations, referred to as User Equipments (UEs). The 3^{rd} Generation Partner Project (3GPP) network normally includes a hybrid of 2G/3G/4G systems. With the optimization of the network design, many improvements have developed over the evolution of various standards. The Next Generation Mobile Network (NGMN) board has decided to focus the future NGMN activities on defining the end-to-end requirements for 5G New Radio (NR) systems.

In 5GS, Single - Network Slice Selection Assistance Information (S-NSSAI) based congestion control mechanism is introduced. The network may detect and start performing S-NSSAI based congestion control when one or more S-NSSAI congestion criteria are met. The network would provide a "5GSM congestion re-attempt indicator" with an ABO (All PLMNs Backoff timer) bit indicating whether the corresponding back-off (BO) timer is applied to all PLMNs, or only the registered PLMN. In 5GS, UEs can be simultaneously registered and connected to both 3GPP access and non-3GPP access (using NAS signalling), the 5GS is thus able to take advantage of these multiple accesses to improve the user experience and optimize the traffic distribution across various accesses. Therefore, the network may also provide a CATBO (Current Access Type Backoff Timer) bit in the "5GSM congestion re-attempt indicator" indicating whether the corresponding back-off timer is applied in a current access (the access from which a message is received), or both 3GPP access type and non-3GPP access type.

It is undefined how UE should stop the running S_NSSAI based congestion timer(s) when a network-requested PDU session procedure is received by UE. Further, it is undefined how to maintain the running S_NSSAI based congestion timer(s), if the timer is applied for one access different from the access from which the message is received by the UE and the UE starts timer applied for both 3GPP access type and non-3GPP access type.

A solution is sought.

### Summary of the Invention

In 5GS, Single-Network Slice Selection Assistance Information (S-NSSAI) based backoff (BO) timers (T3585) can be applied to either 3GPP access or non-3GPP access or both access based on a 5GSM congestion re-attempt indicator. For a specific PDU session, the corresponding BO timer applied to different accesses can be running concurrently. However, there should not be multiple BO timers running concurrently for the same access type. When UE receives a 5GSM message over a specific access, UE needs to handle a current running timer. In one novel aspect, it is proposed that the UE stops the running timer applied for the same access which the message is received, and also stops the running timer applied for both access types. In another novel aspect, it is proposed that the UE stops the running timer applied for the access different from the access which the message is received when the UE starts a new timer applied for both access types.

In an aspect of the invention, a claimed UE is disclosed in the detailed description here below, the UE receives a 5GS session management (5GSM) message over a first access type for a network-requested PDU session procedure. The UE determines whether a current backoff (BO) timer is running, and whether the running BO timer is applied for a first access type. The UE stops the running BO timer in response to the 5GSM message, wherein the 5GSM message belongs to one of a PDU session authentication command, a PDU session modification command, a PDU session release command without a backoff timer, a PDU session release command with a 5GSM cause #39, a PDU session release command with a 5GSM cause #69, a PDU session establishment reject with a BO timer value and with a 5GSM cause #69, a PDU session establishment request with a BO timer value and with a 5GMM (5GS mobility management) cause #69, a PDU session modification reject with a BO timer value and with a 5GSM cause #69, and a PDU session modification request with a BO timer value and with a 5GMM cause #69.

In another aspect of the invention, a claimed UE is disclosed in the detailed description here below, the UE starts a first backoff (BO) timer in a 5G mobile communication network, wherein the first BO timer is an S_NSSAI based congestion timer. The UE receives a 5GS session management (5GSM) message by the UE over a second access type, wherein the 5GSM message belongs to one of a PDU session establishment request with a 5GSM cause #69, a PDU session establishment reject with a 5GSM cause #69, a PDU session modification request with a 5GSM cause #69, a PDU session modification reject with a 5GSM cause #69. The UE starts a second BO timer based on a second BO timer value carried in the 5GSM message, wherein the second BO timer is applied to both the first access type and the second access type. The UE stops the first BO timer when the first BO timer is applied for the first access type.

Other embodiments and advantages are described in the detailed description below. This summary does not purport to define the invention. The invention is defined by the claims.

### Brief Description of the Drawings

The accompanying drawings, where like numerals indicate like components, illustrate embodiments of the invention.
Figure 1 illustrates an exemplary 5G New Radio (NR) network supporting handling of 5GSM congestion timers in accordance with one novel aspect.
Figure 2 illustrates simplified block diagrams of wireless devices in accordance with embodiments of the current invention.
Figure 3 illustrates a 5GSM congestion re-attempt indicator information element IE.
Figure 4 illustrates a first embodiment of stopping existing 5GSM congestion timers based on later received 5GSM message over the same access types in accordance with one novel aspect.
Figure 5 illustrates a second embodiment of stopping existing 5GSM congestion timers based on later received 5GSM message over different access types in accordance with one novel aspect.
Figure 6 is a flow chart of a method of handling 5GSM congestion timers under S-NSSAI based congestion control upon receiving a 5GSM message in accordance with one novel aspect.
Figure 7 is a flow chart of another method of handling 5GSM congestion timers under S-NSSAI based congestion control upon receiving a 5GSM message in accordance with one novel aspect.

### Detailed Description

Reference will now be made in detail to some embodiments of the invention, examples of which are illustrated in the accompanying drawings.

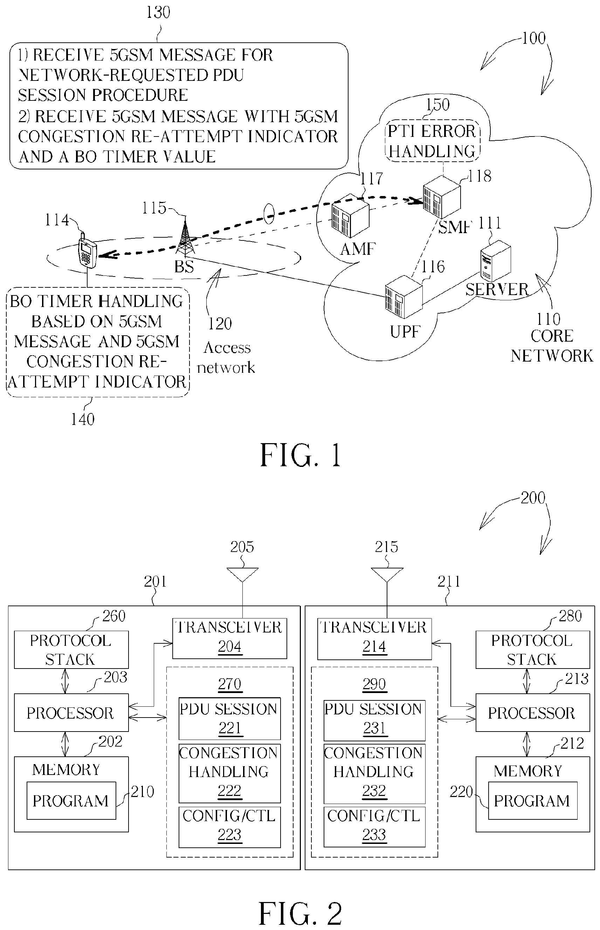

Figure 1 illustrates an exemplary 5G New Radio (NR) network 100 supporting handling of 5GSM congestion timers in accordance with one novel aspect. 5G/NR network 100 comprises application server 111 that provides various services by communicating with a plurality of User Equipments (UEs) including UE 114. In the example of Figure 1, application server 111 belongs to a part of a Core Network (CN) 110. UE 114 and its serving base station BS 115 belong to part of a Radio Access Network (RAN) 120. RAN 120 provides radio access for UE 114 via a Radio Access Technology (RAT). Application server 111 communicates with UE 114 through User Plane Function (UPF) 116 and BS 115. An Access and Mobility Management Function (AMF) 117 communicates with BS 115, Session Management Function (SMF) 118, and UPF 116 for access and mobility management of wireless access devices in 5G/NR network 100. In the example of Figure 1, AMF 117, SMF 118, and UPF 116 also belong to CN 110. UE 114 may be equipped with a Radio Frequency (RF) transceiver or multiple RF transceivers for different application services via different RATs/CNs. UE 114 may be a smart phone, a wearable device, an Internet of Things (IoT) device and a tablet, etc.

In 5GS, Single - Network Slice Selection Assistance Information (S-NSSAI) based congestion control mechanism is introduced. At the UE side, 5GS session management timers T3584 for the S-NSSAI based congestion control are started and stopped on a per S-NSSAI, Data Network Name (DNN) and PLMN basis, and 5GS session management timers T3585 for the S-NSSAI based congestion control are started and stopped on a per S-NSSAI and PLMN basis. The network provides a "5GSM congestion re-attempt indicator" with an ABO (All PLMNs Backoff timer) bit indicating whether the corresponding back-off (BO) timer is applied to all PLMNs, or only the registered PLMN. In addition, the network also provides a CATBO (Current Access Type Backoff Timer) bit in the "5GSM congestion re-attempt indicator" indicating whether the corresponding backoff timer is applied in a current access (the access from which a message is received), or both 3GPP access type and non-3GPP access type. However, it is undefined how UE should stop the running S_NSSAI based congestion timer(s) when a network-requested PDU session procedure is received by UE. Further, it is undefined how to maintain the running S_NSSAI based congestion timer(s), if the BO timer is applied for one access different from the access from which the message is received by the UE and the UE starts a new BO timer applied for both 3GPP access type and non-3GPP access type.

In accordance with one novel aspect of the current invention, a method of handling backoff timer running over different access types for S-NSSAI based congestion control is proposed. For a specific S-NSSAI, the corresponding BO timer applied to different accesses can be running concurrently. However, there should not be multiple BO timers running concurrently for the same access type. When UE 114 receives a 5GSM message over a specific access (130), it triggers the handling of congestion control and BO timer control (140). In one novel aspect, UE 114 receives one of the following 5GSM messages for a network-requested PDU session procedure: 1) Receiving a PDU session authentication command, 2) Receiving a PDU session modification command, 3) Receiving a PDU session release command without a BO timer, 4) Receiving a PDU session release command with 5GSM cause #39, 5) Receiving a PDU session release command with 5GSM cause #69, 6) a PDU session establishment reject with a backoff timer value and with a 5GSM cause #69, 7) a PDU session establishment request with a BO timer value and with a 5GMM (5GS mobility management) cause #69, 8) a PDU session modification reject with a BO timer value and with a 5GSM cause #69, and 9) a PDU session modification request with a BO timer value and with a 5GMM cause #69. It is proposed that UE 114 stops the running timer applied for the same access which the 5GSM message is received, and UE 114 also stops the running timer applied for both access types.

In another novel aspect, UE 114 receives one of the following 5GSM messages: 1) Receiving a PDU session establishment request with 5GMM cause #69, 2) Receiving a PDU session establishment reject with 5GSM cause #69, 3) Receiving a PDU session modification request with 5GMM cause #69, and 4) Receiving a PDU session modification reject with 5GSM cause #69. The 5GSM message includes a 5GSM cause #69 and a BO timer value with a "5GSM congestion re-attempt indicator", e.g., a CATBO bit. It is proposed that the UE stops the running timer applied for the access different from the access which the message is received when the UE starts a new timer applied for both access types, e.g., the CATBO bit in the 5GSM message is set to "The back-off timer is applied in both 3GPP access type and non-3GPP access type".

Figure 2 illustrates simplified block diagrams of wireless devices, e.g., a UE 201 and network entity 211 in accordance with embodiments of the current invention. Network entity 211 may be a base station combined with an AMF. Network entity 211 has an antenna 215, which transmits and receives radio signals. An RF transceiver 214, coupled with the antenna 215, receives RF signals from antenna 215, converts them to baseband signals and transmits them to processor 213. RF transceiver 214 also converts received baseband signals from processor 213, converts them to RF signals, and transmits out to antenna 215. Processor 213 processes the received baseband signals and invokes different functional modules to perform features in network entity 211. Memory 212 stores program instructions and data 220 to control the operations of network entity 211. In the example of Figure 2, network entity 211 also includes a set of control functional modules and circuit 290. PDU session handling circuit 231 handles PDU session establishment, modification, release, and authentication and authorization procedures. Congestion control handling circuit 232 handles backoff timer for congestion control. Configuration-and-control circuit 233 provides different parameters to configure and control UE 201.

Similarly, UE 201 has memory 202, a processor 203, and RF transceiver 204. RF transceiver 204 is coupled with antenna 205, receives RF signals from antenna 205, converts them to baseband signals, and transmits them to processor 203. RF transceiver 204 also converts received baseband signals from processor 203, converts them to RF signals, and transmits out to antenna 205. Processor 203 processes the received baseband signals and invokes different functional modules and circuits to perform features in UE 201. Memory 202 stores data and program instructions 210 to be executed by processor 203 to control the operations of UE 201. Suitable processors include, by way of example, a special purpose processor, a Digital Signal Processor (DSP), a plurality of micro-processors, one or more micro-processor associated with a DSP core, a controller, a microcontroller, Application Specific Integrated Circuits (ASICs), File Programmable Gate Array (FPGA) circuits, and other type of Integrated Circuits (ICs). A processor associated with software may be used to implement and configure features of UE 201.

UE 201 also includes a set of functional modules and control circuits to carry out functional tasks of UE 201. Protocol stacks 260 includes Non-Access-Stratum (NAS) layer to communicate with an AMF and/or an SMF in the core network, Radio Resource Control (RRC) layer for high layer configuration and control, Packet Data Convergence Protocol/Radio Link Control (PDCP/RLC) layer, Media Access Control (MAC) layer, and Physical (PHY) layer. System modules and circuits 270 may be implemented and configured by software, firmware, hardware, and/or combination thereof. The function modules and circuits, when executed by processor 203 via program instructions contained in memory 202, interwork with each other to allow UE 201 to perform embodiments and functional tasks and features in the mobile communication network. In one example, PDU session handling circuit 221 handles PDU session establishment, modification, release, and authentication and authorization procedures. Congestion control handling circuit 222 handles backoff timers for congestion control. Configuration-and-control circuit 223 handles configuration and control of UE 201.

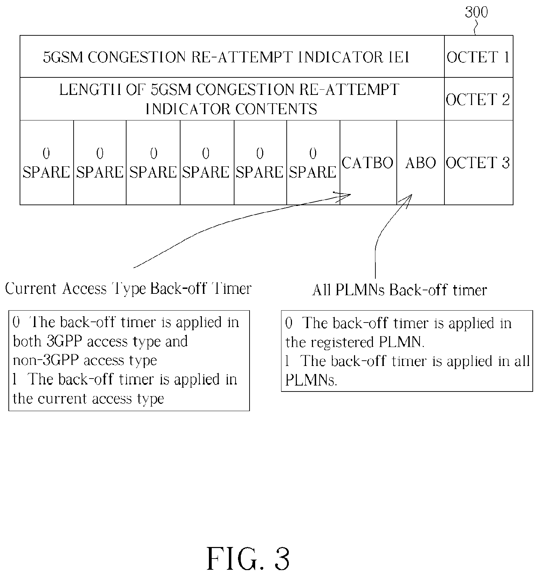

Figure 3 illustrates a 5GSM congestion re-attempt indicator information element IE 300. In 5GS, S-NSSAI based congestion control mechanism is introduced. Traditionally, at the UE side, 5GS session management timers T3584 for the S-NSSAI based congestion control are started and stopped on a per S-NSSAI, DNN and PLMN basis, and 5GS session management timers T3585 for the S-NSSAI based congestion control are started and stopped on a per S-NSSAI and PLMN basis. The purpose of the Re-attempt indicator information element (IE) is to indicate a condition under which the UE is allowed in the current PLMN or its equivalent PLMN(s) for the same DNN, to re-attempt a session management procedure corresponding to the 5GS session management procedure which was rejected by the network. The purpose of the 5GSM congestion re-attempt indicator IE is to indicate whether the back-off timer is applied in the registered PLMN or all PLMNs. In 5GS, since UEs can be simultaneously registered and connected to both 3GPP access type and non-3GPP access type, the purpose of the 5GSM congestion re-attempt indicator IE is also to indicate whether the back-off timer is applied in the current access type (the access from which the 5GSM message is received) or is applied in both 3GPP access type and non-3GPP access type.

Specifically, the network would provide a "5GSM congestion re-attempt indicator", e.g., the ABO (All PLMNs backoff timer) bit and the CATBO (Current access type backoff timer) bit. The ABO bit indicates whether the corresponding back-off (BO) timer is applied to all PLMNs, or the registered PLMN. The CATBO bit indicates whether the corresponding back-off (BO) timer is applied to the current access type, or to both 3GPP and non-3GPP access types. However, the "5GSM congestion re-attempt indicator" is an optional IE. The network may or may not provide the BO timer value(s) and/or the corresponding 5GSM congestion re-attempt indicator.

As depicted by 300, in the UE, 5GS session management timers T3585 for the S-NSSAI based congestion control are started and stopped on a per S-NSSAI, PLMN, and access type basis. The timer T3585 is associated with the mapped S-NSSAI of the PDU session. If the ABO bit of the 5GSM congestion re-attempt indicator IE set to "The back-off timer is applied in all PLMNs" is included in the 5GSM message with the 5GSM cause value #69 "insufficient resources for specific slice", then the UE applies timer T3585 for all the PLMNs. Otherwise, the UE applies timer T3585 for the registered PLMN. If the CATBO bit of the 5GSM congestion re-attempt indicator IE set to "The back-off timer is applied in both 3GPP access type and non-3GPP access type" is included in the 5GSM message with the 5GSM cause value #69 "insufficient resources for specific slice", then the UE applies timer T3585 for both 3GPP and non-3GPP access types. Otherwise, the UE applies timer T3585 for the current access type.

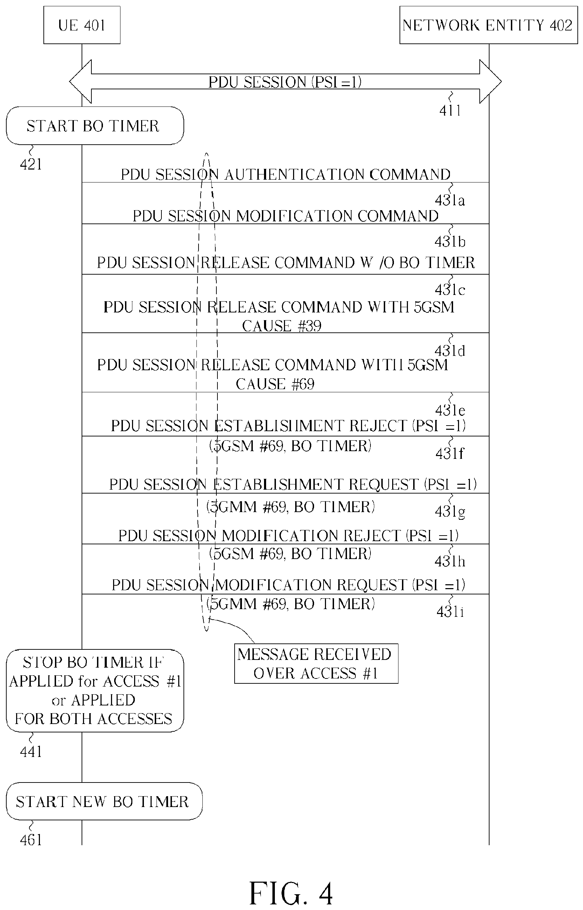

Figure 4 illustrates a first embodiment of stopping existing 5GSM congestion timers based on later received 5GSM message over the same access types in accordance with one novel aspect. In 5G/NR, a Protocol Data Unit (PDU) session defines the association between the UE and the data network that provides a PDU connectivity service. Each PDU session has information including SSC mode, Serving NSSAI, DNN, PDU session type, access type, PDU address, and PDU session ID (PSI). In step 411, UE 401 optionally establishes or maintains a PDU session (PSI=1). In step 421, under certain scenarios of congestion control, UE 401 starts timer T3585 for the S-NSSAI based congestion control on a per S-NSSAI, PLMN (and DNN), and access type basis. The network would provide a "5GSM congestion re-attempt indicator" indicating whether the corresponding BO timer is applied to the current access type or to both 3GPP and non-3GPP access type.

In step 431, UE 401 receives a 5GSM message from the network, which triggers the handling of congestion control and BO timer control. UE 401 may receive one of the following 5GSM messages: 1) Receiving a PDU session authentication command (431a), 2) Receiving a PDU session modification command (431b), 3) Receiving a PDU session release command without a BO timer (431c), 4) Receiving a PDU session release command with 5GSM cause #39 (431d), and 5) Receiving a PDU session release command with 5GSM cause #69 (431e), 6) a PDU session establishment reject with a backoff timer value and with a 5GSM cause #69 (431f), 7) a PDU session establishment request with a BO (backoff) timer value and with a 5GMM (5GS mobility management) cause #69 (431g), 8) a PDU session modification reject with a BO timer value and with a 5GSM cause #69 (431h), and 9) a PDU session modification request with a BO timer value and with a 5GMM cause #69 (431i). This 5GSM message triggers the handling of exisitng BO timer(s).

Note that for a specific S-NSSAI, the corresponding BO timer applied to different access types can be both running concurrently. However, there should be only one BO timer applied to the same access type. In the example of Figure 4, the 5GSM message is received over access #1. In one novel aspect, in step 441, UE 401 determines the current BO timer is applied to which access type. UE 401 stops the current BO timer if it is applied to access #1, UE 401 also stops the current BO timer if it is applied to both acess #1 and access #2 (e.g., both 3GPP and non-3GPP). On the other hand, UE 401 does not stop the current BO timer if it is applied to access #2 only.

Note that the 5GSM message in step 431 may also include a BO timer value and a "5GSM congestion re-attempt indicator". For example, in step 431f, step 431g, step 431h, and step 431i, the 5GSM message includes a BO timer value. If both the BO timer value and the "5GSM congestion re-attempt indicator" are provided in the 5GSM message, then in step 461, UE 401 starts a new BO timer in accordance with the 5GSM message where the BO timer value is provided by the network.

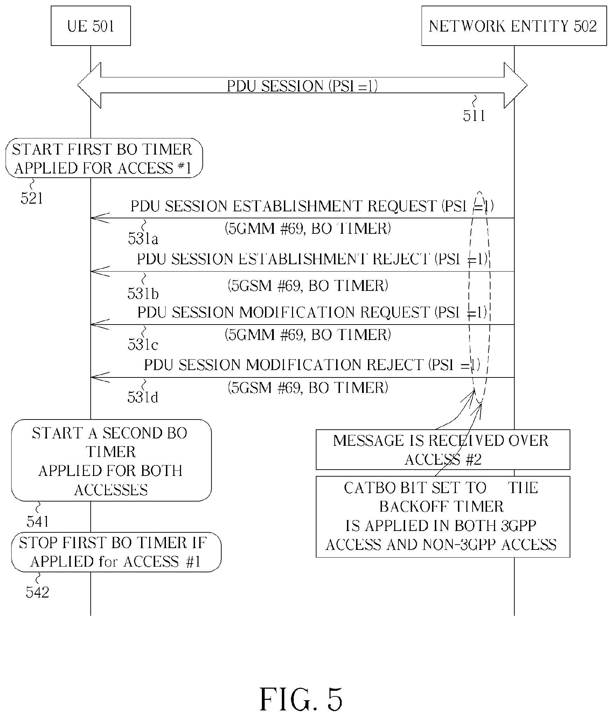

Figure 5 illustrates a second embodiment of stopping existing 5GSM congestion timers based on later received 5GSM message over different access types in accordance with one novel aspect. In step 511, UE 501 optionally establishes or maintains a PDU session (PSI=1). In step 521, under certain scenarios of congestion control, UE 501 starts timer T3585 for the S-NSSAI based congestion control on a per S-NSSAI, PLMN (and DNN), and access type basis. The network would provide a "5GSM congestion re-attempt indicator" indicating whether the corresponding BO timer is applied to the current access type or to both 3GPP and non-3GPP access type.

In step 531, UE 501 receives a 5GSM message from the network, which triggers the handling of congestion control and BO timer control. UE 501 may receive one of the following 5GSM messages: 1) Receiving a PDU session establishment request with 5GMM cause #69 (531a), 2) Receiving a PDU session establishment reject with 5GSM cause #69 (531b), 3) Receiving a PDU session modification request with 5GMM cause #69 (531c), and 4) Receiving a PDU session modification reject with 5GSM cause #69 (531d). The 5GSM message includes a 5GSM/5GMM cause #69 and a BO timer value with a "5GSM congestion re-attempt indicator", e.g., a CATBO bit.

When both the timer value and the "5GSM congestion re-attempt indicator" are provided in the 5GSM message, in step 541, UE 501 starts a second BO timer in accordance with the second 5GSM message where the BO timer value is provided by the network. In the example of Figure 5, the CATBO bit is set to "The back-off timer is applied in both 3GPP access type and non-3GPP access type". As a result, the second BO timer is applied for both 3GPP access and non-3GPP access. In addition to starting the second BO timer, UE 501 also needs to determine whether it should stop the first BO timer that is currently running. In one novel aspect, in step 542, UE 501 determines the first BO timer is applied to which access type. UE 501 stops the first BO timer if it is applied to access #1, even though the 5GSM message is received over access #2, because the second BO timer is applied for both access #1 and access #2. On ther other hand, UE 501 does not stop the first BO timer if the first BO timer is applied to access #1 and the second BO timer is applied to access #2.

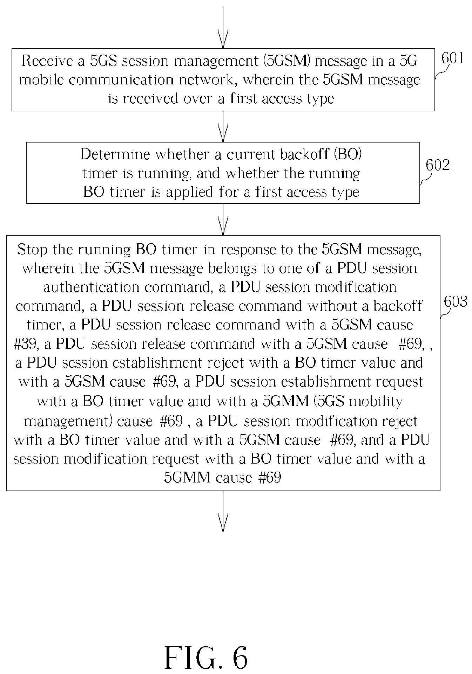

Figure 6 is a flow chart of a method of handling 5GSM congestion timers under S-NSSAI based congestion control upon receiving a 5GSM message in accordance with one novel aspect. In step 601, the UE receives a 5GS session management (5GSM) message in a 5G mobile communication network, wherein the 5GSM message is received over a first access type for a network-requested PDU session procedure. In step 602, the UE determines whether a current backoff (BO) timer is running, and whether the running BO timer is applied for the first access type. In step 603, the UE stops the running BO timer in response to the 5GSM message, wherein the 5GSM message belongs to one of a PDU session authentication command, a PDU session modification command, a PDU session release command without a backoff timer, a PDU session release command with a 5GSM cause #39, a PDU session release command with a 5GSM cause #69, a PDU session establishment reject with a backoff timer value and with a 5GSM cause #69, a PDU session establishment request with a BO timer value and with a 5GMM (5GS mobility management) cause #69, a PDU session modification reject with a BO timer value and with a 5GSM cause #69, and a PDU session modification request with a BO timer value and with a 5GMM cause #69.

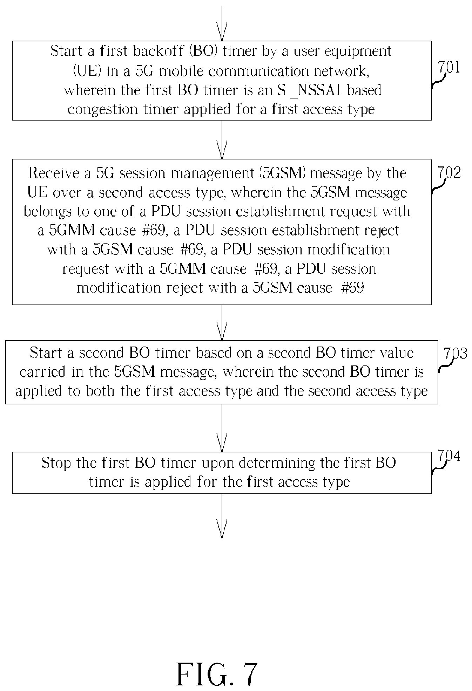

Figure 7 is a flow chart of another method of handling 5GSM congestion timers under S-NSSAI based congestion control upon receiving a 5GSM message in accordance with one novel aspect. In step 701, a UE starts a first backoff (BO) timer in a 5G mobile communication network, wherein the first BO timer is an S_NSSAI based congestion timer applied for a first access type. In step 702, the UE receives a 5GS session management (5GSM) message by the UE over a second access type, wherein the 5GSM message belongs to one of a PDU session establishment request with a 5GMM cause #69, a PDU session establishment reject with a 5GSM cause #69, a PDU session modification request with a 5GMM cause #69, a PDU session modification reject with a 5GSM cause #69. In step 703, the UE starts a second BO timer based on a second BO timer value carried in the 5GSM message, wherein the second BO timer is applied to both the first access type and the second access type. In step 704, the UE stops the first BO timer upon determining that the first BO timer is applied for the first access type.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, **characterized by** comprising:
receiving a 5GS session management (5GSM) message by a user equipment (UE) (114) in a 5G mobile communication network (100), wherein the 5GSM message is received over a first access type;
determining whether a current backoff (BO) timer is running, and whether the running BO timer is applied for the first access type; and
stopping the running BO timer in response to the 5GSM message, wherein the 5GSM message belongs to one of a PDU session authentication command, a PDU session modification command, a PDU session release command without a backoff timer, a PDU session release command with a 5GSM cause #39, and a PDU session release command with a 5GSM cause #69.

2. The method of Claim 1, **characterized in that** the UE (114) stops the running BO timer when the running BO timer is only applied for the first access type.

3. The method of Claim 1, **characterized in that** the UE (114) stops the running BO timer when the running BO timer is applied for both the first access type and a second access type.

4. The method of Claim 1, **characterized in that** the UE (114) does not stop the running BO timer when the running BO timer is only applied for a second access type that is different from the first access type.

5. The method of Claim 1, **characterized in that** the UE (114) stops the running BO timer without receiving a BO timer value.

6. The method of Claim 1, **characterized by** further comprising:
maintaining a protocol data unit (PDU) session by the UE (114), wherein the 5GSM message is related to the PDU session maintained by the UE (114).

7. The method of Claim 1, **characterized by** further comprising:
starting a new BO timer after the running BO timer is stopped, wherein the 5GSM message belongs to one of a PDU session establishment reject with a BO timer value and with a 5GSM cause #69, a PDU session establishment request with the BO timer value and with a 5GMM (5GS mobility management) cause #69, a PDU session modification reject with the BO timer value and with a 5GSM cause #69, and a PDU session modification request with the BO timer value and with a 5GMM cause #69, and wherein the new BO timer is started in accordance with the BO timer value provided by the network.

8. A method, **characterized by** comprising:
starting a first backoff (BO) timer by a user equipment (UE) (114) in a 5G mobile communication network (100), wherein the first BO timer is an S_NSSAI based congestion timer applied for a first access type;
receiving a 5GS session management (5GSM) message by the UE (114) over a second access type, wherein the 5GSM message belongs to one of a PDU session establishment request with a 5GMM (5GS mobility management) cause #69, a PDU session establishment reject with a 5GSM cause #69, a PDU session modification request with a 5GMM cause #69, and a PDU session modification reject with a 5GSM cause #69;
starting a second BO timer based on a second BO timer value carried in the 5GSM message, wherein the second BO timer is applied to both the first access type and the second access type; and
stopping the first BO timer upon determining that the first BO timer is applied for the first access type.

9. A User Equipment (UE) (114), **characterized by** comprising:
a first backoff (BO) timer that is started by the UE (114) in a 5G mobile communication network (100), wherein the first BO timer is an S_NSSAI based congestion timer applied for a first access type;
a receiver that receives a 5GS session management (5GSM) message over a second access type, wherein the 5GSM message belongs to one of a PDU session establishment request with a 5GMM (5GS mobility management) cause #69, a PDU session establishment reject with a 5GSM cause #69, a PDU session modification request with a 5GMM cause #69, and a PDU session modification reject with a 5GSM cause #69;
a second BO timer that is started by the UE (114) based on a second BO timer value carried in the 5GSM message, wherein the second BO timer is applied to both the first access type and
the second access type; and
a control circuit that stops the first BO timer upon determining that the first BO timer is applied for the first access type.

10. The method of Claim 8 or the UE (114) of Claim 9, **characterized in that** the 5GSM message comprises a 5GSM congestion re-attempt indicator.

11. The method or the UE (114) of Claim 10, **characterized in that** the 5GSM congestion re-attempt indicator comprises a current access type backoff timer (CATBO) bit.

12. The method or the UE (114) of Claim 11, **characterized in that** the CATBO bit is set to "the back-off timer is applied in both 3GPP access type and non-3GPP access type".

13. The method of Claim 8 or the UE (114) of Claim 9, **characterized in that** the UE (114) does not stop the first BO timer when the second BO timer is only applied for the second access type.

14. The method of Claim 8 or the UE (114) of Claim 9, **characterized in that** the UE (114) stops the first BO timer applied for the first access type that is different from the second access type over which the 5GSM message is received.

15. The method of Claim 8, **characterized in that** the first BO timer and the second BO timer are both T3585 timers.
